# EUROPEAN PATENT APPLICATION

(11) **EP 4 523 865 A1**
(43) Date of publication of application: **19.03.2025**
(21) Application number: 24189984.8
(22) Date of filing: 22.07.2024
(51) Int. Cl.: B25J 9/16, B23K 26/70, B23K 26/38, G05B 19/402, B21D 43/28

(54) **PROCESS FOR SEPARATING, COLLECTING AND STORING PIECES CUT FROM ONE OR MORE METAL SHEETS AND SYSTEM IMPLEMENTING SAID PROCESS**

(30) Priority: 13.09.2023 IT 202300018840
(71) Applicant: STARMATIK SRL, 31027 Spresiano (TV) (IT)
(72) Inventor: FAVA, Stefano, 31027 SPRESIANO (IT)
(74) Representative: Rocchetto, Elena

(57) **Abstract**

The present patent concerns a process for separating, collecting and storing pieces cut from one or more metal sheets and resulting from at least one cutting step during which one or more pieces, variously arranged and configured, have been cut on said metal sheet. The present patent concerns also the system implementing said process.

## Description

The present patent concerns equipment for laser cutting of sheet metal and in particular it concerns a new process for separating, collecting and storing pieces cut from one or more metal sheets and a system implementing the process.

Sheet metal laser cutting machines are known, in which a metal sheet is placed on a cutting plane and one or more variously arranged pieces in different shapes are cut from it.

Once the metal sheet has been cut, it can be stripped into the pieces that make it up and the skeleton (or scrap) through manual or automatic operations, directly on the operating area of the cutting machine used. Alternatively, the cut sheet is collected complete with the skeleton and placed outside the operating area of the machine.

The cut pieces are removed from the skeleton on this surface, collected and stored. This can be done manually or by means of automated devices.

Once the cut pieces have been collected, the skeleton is left, which also must be removed from the work surface and stored.

There are automatic or semi-automatic systems that separate the cut pieces and palletize them; said systems are generally produced by the manufacturer of the cutting machine and integrated with it.

Currently, standardised machining is limited to cutting machines, which can work in a completely autonomous manner, even 24 hours a day, executing preset cutting programmes.

On the contrary, the operation of separating the cut pieces cannot generally be standardised and automated, as innumerable variables need to be managed, many of which are unpredictable, first of all the exact position of the pieces to be collected, due to possible and not infrequent misplacements of part of the cut pieces and the skeleton.

Therefore, this operation is carried out immediately after the cutting step and is performed on each metal sheet as soon as it leaves the cutting step. This operation also requires control and possibly manual intervention by one or more operators. All the above limits the hourly productivity of the system and the possibility of fully automating sheet metal processing.

The subject of the present invention is a new process for separating, collecting and storing pieces cut from one or more metal sheets and a system implementing said process.

The main object of the present invention is to provide a system that allows pieces cut from a metal sheet to be separated, making this operation completely independent of the cutting machine and of the cutting operations from which the metal sheet originates.

Said system, in fact, does not work on the cutting machine or immediately downstream of the latter, but in any other position to which the metal sheets coming from one or more cutting machines are brought, and where the cut pieces are separated from the corresponding skeletons.

The new process thus allows production to be optimised, as it is also possible to collect the cut pieces in a fully automatic and continuous manner, even 24 hours a day.

The new process comprises the following steps:
a) transferring a first metal sheet from an exit plane of a cutting machine onto a stacking plane;
b) transferring a second metal sheet from an exit plane of a cutting machine onto said stacking plane, where it is superimposed on the previously positioned metal sheet;
c) repeating the previous step b) until forming a stack comprising a given number of superimposed metal sheets; the height of the stack can be variable; the number and size of the cut pieces of each metal sheet can be variable; while a metal sheet is being handled, one or more cut pieces may fall onto the stacking plane or onto the underlying metal sheets; therefore, the metal sheets forming the stack may not be positioned in a regular manner and may not be parallel to one another. For example, some cut pieces, which may have different geometric shapes and thicknesses, may be accidentally interposed or even fixed between two metal sheets;
d) storing the positioning sequence of the metal sheets in the stack and the data related to each metal sheet in the stack, wherein said data includes at least: thickness and dimensions of the metal sheet, geometry, thickness and theoretical arrangement of the cut pieces and of the skeleton, cutting machine which performed the cutting operation;
e) determining the actual position of said metal sheet, at the top of the stack, and of the pieces that make it up; this step is intended to determine whether the cut pieces are in positions from which they can be collected or whether they are covered or partially covered by the skeleton of the metal sheet from which they originate; said step is carried out by filming or scanning the surface of the metal sheet and comparing the data obtained from the scan with said stored theoretical data relating to the metal sheet itself, wherein said stored data concerns, as mentioned, the exact arrangement of the pieces, their geometrical shape and their thickness;
f) for each of the correctly positioned pieces or, in any case, of the pieces that can be collected without the skeleton hindering the operations, the step of programming, configuring and handling at least one gripping member, and the successive step of collecting the piece, wherein said programming/configuring/handling step takes place according to said stored data and to the data processed during said determination step;
g) unloading the collected pieces into one or more unloading areas related to the same order or to other orders;
h) collecting and removing the skeleton, which is positioned in one or more unloading areas; once the pieces meeting the requirements of the previous steps have been collected, in the case where one or more pieces are left which are positioned so that the skeleton of the metal sheet prevents them from being collected, the process includes the step of removing the skeleton and positioning it in one or more unloading areas, and successively the repetition of the previous steps f) and g).

The process then starts from the design data related to each metal sheet and to the geometrical shape, thickness and arrangement of the cut pieces and the skeleton.

Said skeleton of each metal sheet can in turn be cut into pieces, when it is still in the cutting machine, in order to optimise its storage or facilitate its separation.

The system implementing the process comprises at least one stacking plane on which said stack will be formed, means for handling said stacking plane, if any, at least one gripping member, at least one mechanical system, preferably a CAS (controlled-axis sorting) system, that is, a Cartesian robot with 3 or more axes or one or more anthropomorphic robots with 4 or more coordinated axes each, suited to handle the configuration/movement of said gripping member according to any variant.

Said stacking plane comprises a stacking table or pallet of any size, for example sized and configured to handle metal sheets whose dimensions can even reach 8000 x 3000 mm, for example.

Therefore, with reference to the above description, the following claims are made.

## Claims

1. Process for separating, collecting and storing pieces cut from one or more metal sheets and resulting from at least one cutting step during which one or more pieces, variously arranged and configured, have been cut from said metal sheet, **characterized in that** it comprises the following steps:
a) the step of transferring at least one first metal sheet from an exit plane of a cutting machine onto a stacking plane where said metal sheet is transferred while it is still whole, that is, comprising said cut pieces and the remaining part of the sheet, the skeleton, if any;
d) the step of storing the theoretical design data related to said at least one metal sheet, wherein said design data comprise at least: thickness and dimensions of the theoretical metal sheet, theoretical geometry, thickness and arrangement of the cut pieces and of the skeleton, if any;
e) the step of scanning said at least one entire metal sheet and each one of the pieces that make it up and the step of comparing the stored theoretical data and the data obtained from said scanning step, in order to determine whether one or more of the cut pieces is/are in precise positions from where they can be collected or if they are covered or partially covered by other pieces and/or by the skeleton, if any;
f) for each of the correctly positioned pieces or, in any case, of the pieces that can be collected without the skeleton or other pieces hindering the operation, the step of programming, configuring and handling at least one gripping member, and the successive step of collecting the piece, wherein said programming/ configuring/handling step takes place according to said stored data and to the data processed during said determination step;
g) the step of unloading said collected pieces onto one or more unloading areas;
h) once the pieces meeting the requirements of the previous step f) have been collected, in the case where one or more pieces are left which are positioned so that the skeleton of the metal sheet prevents them from being collected, the process includes the step of removing the skeleton and positioning it in one or more unloading areas, and successively the repetition of the previous steps f) and g).

2. Process according to claim 1, **characterized in that** it comprises the following steps:
b) the step of transferring a second metal sheet from an exit plane of a cutting machine onto said stacking plane, where it is superimposed on said first previously positioned metal sheet;
c) if necessary, the step of repeating said previous step b) until forming a stack comprising a given number of superimposed metal sheets, each comprising one or more cut pieces and a skeleton;
d) the step of storing the positioning sequence of the metal sheets in the stack and said design data related to each metal sheet;
and wherein said steps e), f), g), h) are repeated in sequence for each of said metal sheets, starting from the top of the stack.

3. Process according to claim 1 or 2, **characterized in that** said skeleton is cut into two or more pieces before said step a) or b), in order to facilitate the removal of said skeleton and/or of said cut pieces.

4. Process according to claim 1, **characterized in that** said scan is a 2D/3D scan, or a sensor/camera system is used, for example of the time-of-flight analyzer type.

5. System implementing the process according to claims from 1 to 4 for separating, collecting and storing pieces cut from one or more metal sheets and resulting from at least one cutting step during which one or more pieces, variously arranged and configured, have been cut from said metal sheet, **characterized in that** it comprises:
- at least one stacking plane on which said stack formed by one or more of said metal sheets will be created;
- at least one gripping member for gripping and handling at least one piece at a time from those making up said metal sheet;
- at least one mechanical system suited to manage the configuration/handling of said gripping member according to preset commands.

6. System according to claim 5, **characterized in that** said at least one mechanical system comprises a CAS (controlled-axis sorting) system, meaning a Cartesian robot with 3 or more axes or one or more anthropomorphic robots with 4 or more coordinate axes each.

7. System according to claim 5 or 6, **characterized in that** said stacking plane can be an area on the floor or may comprise a flatbed or a pallet having any dimension or any fixed or movable support.

8. System according to claim 5 or 6 or 7, **characterized in that** it comprises one or more unloading areas where it is possible to unload the cut and collected pieces and which are related to the same order or to two or more different orders.
